# EUROPÄISCHE PATENTSCHRIFT

(11) **EP 3 521 969 B1**
(45) Veröffentlichungstag und Bekanntmachung des Hinweises auf die Patenterteilung: **05.08.2020**
(21) Anmeldenummer: 18154614.4
(22) Anmeldetag: 01.02.2018
(51) Int. Cl.: G06F 1/16

(54) **GEHÄUSE AUS MITEINANDER LÖSBAR VERBUNDENEN GEHÄUSETEILEN**
HOUSING MADE OF SECTIONS MADE OF INDIVIDUAL STRIPS DETACHABLY JOINED TO ONE ANOTHER
BOÎTIER À PARTIR DES PARTIES DE BOÎTIER RACCORDÉES DE MANIÈRE AMOVIBLE

(43) Veröffentlichungstag der Anmeldung: 07.08.2019
(73) Patentinhaber: ads-tec GmbH, 72622 Nürtingen (DE)
(72) Erfinder: Speidel, Thomas, 71706 Markgröningen (DE); Mader, Daniel, 73525 Schwäbisch Gmünd (DE)
(74) Vertreter: Wasmuth, Rolf

(56) Entgegenhaltungen:
- US-A1- 2013 294 020

## Beschreibung

Die Erfindung betrifft ein Gehäuse, insbesondere ein Gehäuse eines Tablet-PCs, aus zumindest einem ersten Gehäuseteil und zumindest einem zweiten Gehäuseteil, wobei der erste Gehäuseteil eine Montageöffnung zur Montage von elektronischen Bauteilen wie Prozessor, Speicherelemente, Kommunikationselemente (z. B. WLAN, Bluetooth etc.), und vorteilhaft einen Akku aufweist. Das zweite Gehäuseteil wird als Verschlusselement für die Montageöffnung des ersten Gehäuseteils genutzt und kann z. B. einen Touch-Bildschirm oder dgl. aufweisen. Das in der Montageöffnung liegende zweite Gehäuseteil ist lösbar mit dem ersten Gehäuseteil verbunden.

Derartige Tablet-Gehäuse sind bekannt. Das zweite Gehäuseteil ist vorteilhaft als Montagerahmen ausgebildet, in dem eine Bildschirmeinheit und/oder Bedienelemente gehalten sind. Der Montagerahmen mit montierter Bildschirmeinheit dient dabei zugleich als Verschlussdeckel für das erste Gehäuseteil. Zum lösbaren Verbinden des Montagerahmens (zweites Gehäuseteil) mit dem z. B. als Gehäusewanne ausgebildeten ersten Gehäuseteil ist eine Verschraubung bekannt. So kann das zweite Gehäuseteil über in der Rückwand des ersten Gehäuseteils vorgesehene Schraubverbindungen lösbar mit dem ersten Gehäuseteil verbunden werden.

Ein Beispiel eines bekannten Tablet-PCs zeigt die US 2013/0294020 A1. Die Druckschrift zeigt verschiedene Montagemöglichkeiten eines LCD Bildschirms an einer Gehäusewanne.

Werden Tablet-PCs in Schmutzräumen verwendet, muss das Gehäuse vorgegebenen Schutzklassen (IP54 bis IP67) entsprechen, um ein Eindringen von Schmutz, Staub, Feuchtigkeit und dgl. in das Gehäuse auszuschließen. Hierzu werden Dichtungen verwendet, welche - je nach zu erreichender Schutzklasse - aufwendig ausgebildet sind, insbesondere um die im ersten Gehäuseteil vorgesehenen Befestigungsöffnungen herum geführt sein müssen. Diese Befestigungsöffnungen sind für die Befestigungsschrauben zum Festlegen des zweiten Gehäuseteils notwendig. Die hierzu verwendeten Dichtungen sind konstruktiv aufwendig und daher teuer.

Der Erfindung liegt die Aufgabe zugrunde, ein Gehäuse, insbesondere ein Gehäuse für einen Tablet-PC derart auszubilden, dass das Gehäuse bei einfachem Aufbau staub- und flüssigkeitsdicht zu verschließen ist und den Anforderungen hoher Schutzklassen entspricht, dennoch aber zur Wartung und Reparatur der im Gehäuse eingeschlossenen Bauelemente leicht zu öffnen ist.

Die Aufgabe wird nach den Merkmalen des Anspruchs 1 gelöst.

In einem Innenrand der Montageöffnung des ersten Gehäuseteils ist eine Innennut ausgebildet, die sich in Längsrichtung des Innenrandes über zumindest einen Randabschnitt erstreckt. Die Nutöffnung der Innennut liegt dem Zentrum der Montageöffnung zugewandt.

In einem Außenrand des zweiten Gehäuseteils ist eine Außennut ausgebildet, die sich in Längsrichtung des Außenrandes über zumindest einen Randabschnitt des zweiten Gehäuseteils erstreckt. Die Nutöffnung der Außennut liegt einem Zentrum des rahmenartigen, zweiten Gehäuseteils abgewandt.

In der Montagelage des zweiten Gehäuseteils als Verschlusselement der Montageöffnung des ersten Gehäuseteils liegt die Außennut im Außenrand des zweiten Gehäuseteils der Innennut im Innenrand des ersten Gehäuseteils gegenüber. Die Anordnung ist so getroffen, dass in der Montagestellung die Innennut und die Außennut einen gemeinsamen Riegelkanal bilden.

Zur mechanischen Verbindung des ersten Gehäuseteils mit dem zweiten Gehäuseteil wird in den Riegelkanal ein Riegelelement eingeschoben, welches mit einem ersten Teilabschnitt in der Innennut und mit einem zweiten Teilabschnitt in der Außennut liegt. Durch das eingeschobene Riegelelement wird - insbesondere senkrecht zur Ebene der Montageöffnung - eine formschlüssige, lösbare Verbindung zwischen dem ersten und dem zweiten Gehäuseteil hergestellt.

Die bisher im Stand der Technik notwendigen Befestigungsschrauben für das zweite Gehäuseteil als Verschlusselement der Montageöffnung entfallen ersatzlos. Somit entfallen auch die im ersten Gehäuseteil für Befestigungsschrauben sonst notwendigen Befestigungsöffnungen oder Aufnahmedome und dgl., wodurch das erste Gehäuseteil konstruktiv vereinfacht ist und mit geschlossenen Flächen ausgebildet werden kann. Darüber hinaus kann aufgrund des Entfalls der Befestigungsöffnungen eine zwischen den Gehäuseteilen anzuordnende Dichtung konstruktiv stark vereinfacht ausgelegt werden. Mit einer konstruktiv einfach aufgebauten Dichtung kann ein staub- und feuchtigkeitsdichtes Verschließen des insbesondere als Gehäusewanne ausgebildeten ersten Gehäuseteils durch das zweite Gehäuseteil erzielt werden. Die erfindungsgemäße Verbindung des zweiten Gehäuseteils mit dem ersten Gehäuseteil eröffnet die Möglichkeit, mit einfach ausgebildeten Dichtungen hohe Schutzklassen bis hin zu IP65, IP67 oder gar IP69k erreichen.

Von besonderem Vorteil ist die einfache Lösbarkeit der formschlüssigen Verbindung. Das Riegelelement braucht lediglich aus dem Riegelkanal herausgezogen zu werden, um das zweite Gehäuseteil vom ersten Gehäuseteil zu lösen.

In vorteilhafter Weiterbildung der Erfindung ist das zweite Gehäuseteil als Montagerahmen für einen elektronischen Bildschirm ausgebildet. Die Montage des elektronischen Bildschirms im zweiten Gehäuseteil kann getrennt von der Montage der notwendigen Bauteile eines Tablet-PCs in dem ersten Gehäuseteil erfolgen.

In Weiterbildung der Erfindung ist der Montagerahmen mit einem umlaufenden Sichtrahmen ausgebildet. In der Montageöffnung selbst ist ein dem Sichtrahmen zugeordneter Anschlagrand vorgesehen. Die Konstruktion ist derart ausgebildet, dass sich der Sichtrahmen und der Anschlagrand senkrecht zur Ebene des Sichtrahmens bzw. senkrecht zur Ebene des Anschlagrandes einander überlappen. Beim Einsetzen des Montagerahmens des zweiten Gehäuseteils in die Gehäusewanne des ersten Gehäuseteils wird die Einbautiefe des Montagerahmens durch Anschlagen des Sichtrahmens an dem Anschlagrand begrenzt. Der Sichtrahmen kann vollständig durch einen Touchscreen verdeckt und damit nicht sichtbar sein. Insbesondere ist nur ein sehr kleiner Teil des Sichtrahmens für den Benutzer von außen erkennbar.

In besonderer Weiterbildung der Erfindung ist der Außenrand des zweiten Gehäuseteils als Träger eines elastischen Dichtelementes ausgebildet. Insbesondere kann der äußere Rand des Sichtrahmens als Träger eines elastischen Dichtelementes ausgebildet sein.

Das elastische Dichtelement ist derart vorgesehen, dass zwischen dem Innenrand der Montageöffnung des ersten Gehäuseteils und dem Anschlagrand des zweiten Gehäuseteils zumindest ein Dichtabschnitt zu liegen kommt. Die Dimensionierung des Dichtabschnitts ist derart vorgesehen, dass das als Montagerahmen ausgebildete zweite Gehäuseteil unter elastischer Verformung des Dichtabschnittes des Dichtelementes in die Montageöffnung des ersten Gehäuseteils eingesetzt ist. Die Innennut und die Außennut kommen erst nach elastischer Verformung des Dichtabschnittes miteinander zur Deckung, um einen gemeinsamen Riegelkanal zu bilden. Dies hat zur Folge, dass nach Einschieben des Riegelelementes die elastische Rückstellkraft des Dichtabschnitts des Dichtelementes den Montagerahmen nach außen drängt, so dass das Riegelelement zwischen den Schenkeln der Innennut und der Außennut verspannt gehalten ist. Durch die wirkenden Kräfte ist der Montagerahmen auch weitgehend spielfrei in der Montageöffnung gehalten.

Das Riegelelement ist vorteilhaft von einem Riegelband gebildet, welches aus einem in eine Riegellängsrichtung sich erstreckenden Träger mit daran gehaltenen Riegelkörpern besteht. Der Träger weist eine Breite auf, die vorteilhaft kleiner oder gleich der Breite der Innennut im ersten Gehäuseteil ist. Die Riegelkörper sind zweckmäßig als Riegelstege ausgebildet, wobei ein Riegelsteg vorzugsweise quer zur Riegellängsrichtung ausgerichtet liegt. Insbesondere erstreckt sich der Riegelsteg über die gesamte Breite des Trägers des Riegelbandes. Der Träger und die Riegelkörper sind insbesondere als einteilig gefertigtes Riegelband ausgebildet. Als Material zur Fertigung des Riegelbandes wird bevorzugt Kunststoff verwendet, insbesondere elastischer Kunststoff wie POM (Polyoxymethylen). Eine Verwendung von Polyamid (PA6) kann vorteilhaft sein. Polyamid hat insbesondere eine höhere Vicat Erweichungstemperatur (Vicat softening temperature).

Das Riegelelement wird über eine Zugangsöffnung in Riegellängsrichtung in den Riegelkanal eingeschoben. Für ein leichtes Einschieben ist es zweckmäßig, das zweite Gehäuseteil mit einer Montagekraft derart zu beaufschlagen, dass die Innennut und die Außennut unter Bildung des Ringkanals zueinander ausgerichtet liegen. Zweckmäßig hat die Außennut eine größere Nutbreite als die Innennut, so dass eine maßgenaue Positionierung der Innennut zur Außennut nicht notwendig ist. Zum Einschieben des Riegelelementes ist es ausreichend, wenn die Innennut in der Nutöffnung der Außennut liegt. Dies erleichtert die Dimensionierung der aufzubringenden Montagekraft.

Die Innennut und/oder die Außennut sind vorteilhaft als umlaufende Nut ausgebildet, insbesondere als endlose, umlaufende Nut gestaltet. Der Riegelkanal ist in Form eines umlaufenden Ringkanals vorgesehen, der zumindest eine Zufuhröffnung aufweist. Zweckmäßig ist die Zugangsöffnung im Nutboden der Innennut ausgebildet. Die Zugangsöffnung erstreckt sich in ihrer Breite vorteilhaft über die gesamte Breite des Nutbodens.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine perspektivische Ansicht auf ein Gehäuse, insbesondere auf ein Gehäuse eines Tablet-PCs,
- Fig. 2: eine perspektivische Ansicht der wesentlichen Gehäuseteile des Gehäuses nach Fig. 1 in Explosionsdarstellung,
- Fig. 3: eine Seitenansicht auf das Gehäuse nach Fig. 1,
- Fig. 4: einen Schnitt durch das Gehäuse längs der Schnittlinie IV-IV in Fig. 3,
- Fig. 5: einen Schnitt durch das Gehäuse längs der Linie V-V in Fig. 4,
- Fig. 6: in vergrößerter Darstellung das Detail VI in Fig. 5,
- Fig. 7: eine Darstellung des Details VI gemäß Fig. 6 mit einem Dichtelement,
- Fig. 8: eine Ansicht eines Riegelelementes in der Form eines Riegelbandes,
- Fig. 9: in vergrößerter Darstellung einen Bandabschnitt des Riegelelementes nach Fig. 8 mit einteilig angeformten Riegelkörpern,
- Fig. 10: ein Riegelelement in einer weiteren Ausführungsform als aus Bandabschnitten zusammengesetztes Riegelband,
- Fig. 11: eine Seitenansicht auf das Riegelelement nach Fig. 10 mit als Hohlkörpern ausgebildeten Riegelkörpern.

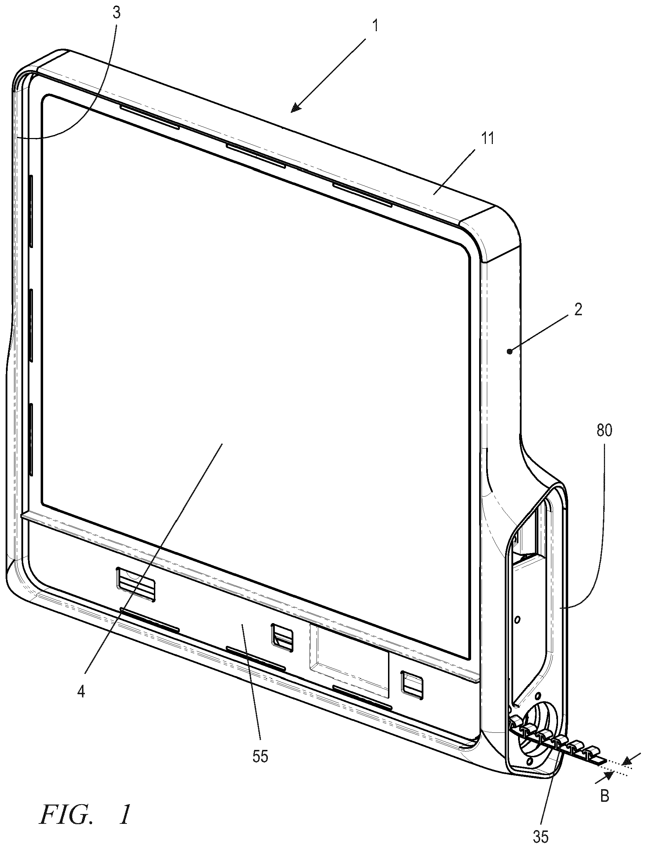

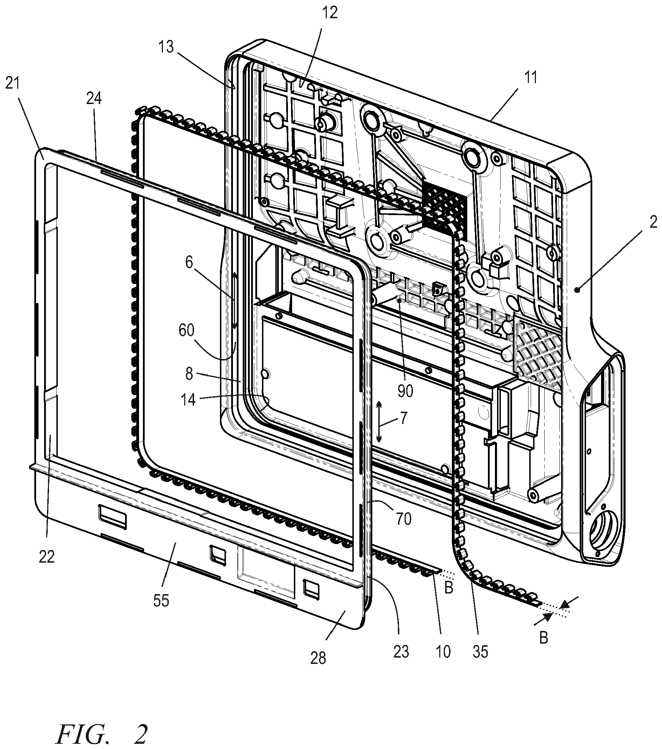

Das in den Figuren 1 und 2 gezeigte Gehäuse ist vorteilhaft als Gehäuse für ein Tablet-PC gestaltet. Das Gehäuse 1 besteht im Wesentlichen aus einem ersten Gehäuseteil 11 und einem zweiten Gehäuseteil 21. Das erste Gehäuseteil 11 ist zweckmäßig als Gehäusewanne 2 ausgebildet und dient der Aufnahme von Bauteilen eines Tablet-PCs wie z.B. einer Hauptplatine, einem Hauptprozessor, Speicherbausteinen, einem Akkupack, einer Festplatte und Kommunikationsmodulen wie WLAN-Module, Bluetooth-Module oder dgl. Insbesondere zur Aufnahme eines Kommunikationsmoduls ist das erste Gehäuseteil mit einer seitlichen Gehäuseerweiterung versehen. Ein Verschlussdeckel des Gehäuseabschnitts aus Kunststoff stellt sicher, dass keine elektromagnetische Abschirmung der Sende- und Empfangsantenne auftritt.

Das vorteilhaft wannenförmig ausgebildete erste Gehäuseteil 11 weist eine Montageöffnung 12 auf, die sich im gezeigten Ausführungsbeispiel über eine Flachseite des ersten Gehäuseteils 11 erstreckt. Die Flachseite entspricht der offenen Seite der Gehäusewanne.

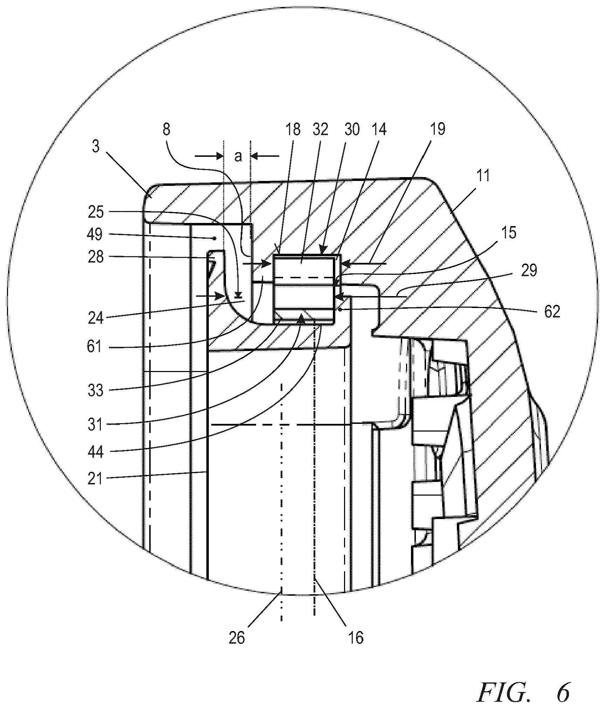

Die Montageöffnung 12 weist einen Innenrand 13 auf, der - wie Fig. 1 zeigt - als Rahmen 3 ausgebildet ist. Im Innenrand 13 des ersten Gehäuseteils 11 ist eine Innennut 14 ausgebildet. Die Innennut 14 ist - wie Fig. 6 zeigt - im Querschnitt U-förmig ausgebildet. Die Nutöffnung 15 der Innennut liegt quer zur Ebene 16 der Montageöffnung 12. Insbesondere liegt die Ebene der Nutöffnung 15 orthogonal zur Ebene 16 der Montageöffnung. Die Nutöffnung 15 liegt dem Zentrum 90 der Montageöffnung 12 zugewandt. Eine Mittelebene 66 der Innennut 14 liegt parallel zur Ebene 16 der Montageöffnung 12; insbesondere kann die Mittelebene 66 der Innennut 14 in der Ebene 16 der Montageöffnung 12 liegen.

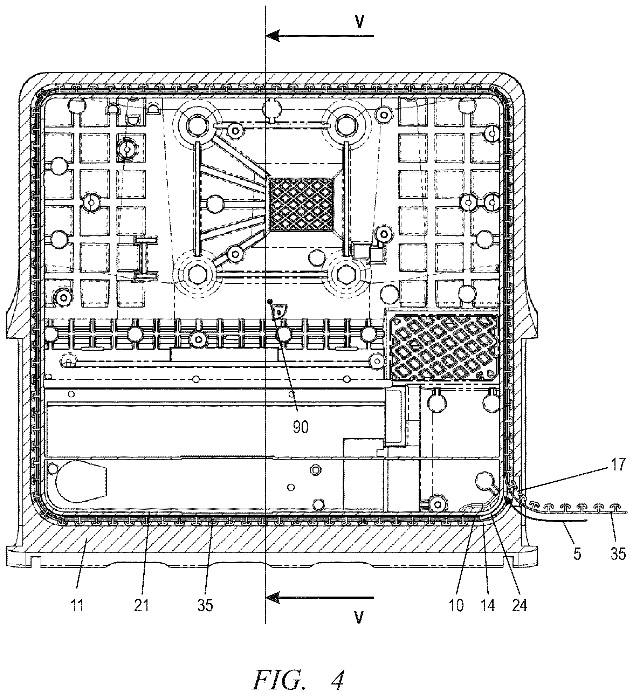

Die Innennut 14 erstreckt sich - wie in Fig. 2 gezeigt - in Längsrichtung 6 des Innenrandes 13. Vorteilhaft erstreckt sich die Innennut 14 über zumindest einen Randabschnitt 70 der Montageöffnung 12. In vorteilhafter Ausführungsform ist die Innennut 14 - wie Fig. 4 zeigt - als umlaufende Innennut 14 gestaltet. Die Innennut 14 ist eine endlose, insbesondere U-förmige Nut. Die Innennut 14 weist eine äußere Zugangsöffnung 17 auf, die im Außenrand des ersten Gehäuseteils ausgebildet ist. Die Zugangsöffnung 17 mündet im Nutboden 18 der Innennut 14. Die Zugangsöffnung 17 erstreckt sich vorteilhaft über die gesamte Breite 19 der Innennut 14.

Das zweite Gehäuseteil 21 ist im Ausführungsbeispiel insbesondere als Montagerahmen 22 für einen Bildschirm 4 ausgebildet, vorzugsweise zur Montage eines Touchscreens vorgesehen. Das zweite Gehäuseteil 21 weist einen Außenrand 23 auf. In Längsrichtung 7 des Außenrandes 23 des zweiten Gehäuseteils 21 erstreckt sich über zumindest einen Randabschnitt 70 eine Außennut 24. Wie Fig. 6 zeigt, kann die Außennut 24 in ihrer Breite 29 vorteilhaft breiter als die Innennut 14 des ersten Gehäuseteils 11 ausgebildet sein. Die Breite 19 der Innennut 14 ist im Ausführungsbeispiel kleiner als die Breite 29 der Außennut 24. Auch andere Abmessungen können vorteilhaft sein.

Die Außennut 24 ist vorteilhaft als U-förmige Nut ausgebildet und weist eine Nutöffnung 25 auf, deren Ebene quer zur Ebene 26 des zweiten Gehäuseteils 21 bzw. des Montagerahmens 22 liegt. Vorteilhaft liegt die Ebene der Nutöffnung 25 auch orthogonal zur Ebene 16 des ersten Gehäuseteils 11 bzw. der Montageöffnung 12.

Wie Fig. 4 zu entnehmen, ist die Außennut 24 als endlose Nut ausgebildet. Die Außennut 24 erstreckt sich in Längsrichtung des Montagerahmens 22 über dessen gesamten Umfang.

Das zweite Gehäuseteil 21, insbesondere der Montagerahmen 22 ist in seinen Abmessungen derart ausgebildet, dass er in die Montageöffnung 12 eingesetzt werden kann. Das erste Gehäuseteil 11 umgibt das in die Montageöffnung 12 eingesetzte zweite Gehäuseteil 21 rahmenartig.

Insbesondere ist das als Montagerahmen 22 ausgebildete zweite Gehäuseteil 21 mit einem erweiterten Sichtrahmen 28 ausgebildet, dem in der Montageöffnung 12 ein Anschlagrand 8 zugeordnet ist. Der Sichtrahmen kann durch einen Touchscreen zu einem größeren Teil, insbesondere vollständig abgedeckt sein. Wie Fig. 6 zeigt, überlappen sich der Sichtrahmen 28 und der Anschlagrand 8, so dass das zweite Gehäuseteil 21 mit dem Sichtrahmen 28 auf dem Anschlagrand 8 des ersten Gehäuseteils 11 zur Anlage kommt. Dadurch wird die maximale Einschubtiefe des zweiten Gehäuseteils 21 bzw. des Montagerahmens 22 in die Montageöffnung 12 des ersten Gehäuseteils 11 begrenzt. Vorteilhaft ist der Sichtrahmen 28 umlaufend ausgebildet, wie insbesondere auch Fig. 2 zeigt. Der Anschlagrand 8 ist entsprechend umlaufend ausgebildet und liegt dem Sichtrahmen 28 des Montagerahmens 22 zugewandt.

Die Konstruktion ist derart ausgebildet, dass sich der Sichtrahmen 28 und der Anschlagrand 8 senkrecht zur Ebene 26 des Montagerahmens 22 bzw. senkrecht zur Ebene der Montageöffnung 12 einander überlappen. Beim Einsetzen des Montagerahmens 22 des zweiten Gehäuseteils 11 in die Gehäusewanne des ersten Gehäuseteils 21 wird die Einbautiefe des Montagerahmens 22 durch Anschlagen des Sichtrahmens 28 an dem Anschlagrand 8 begrenzt.

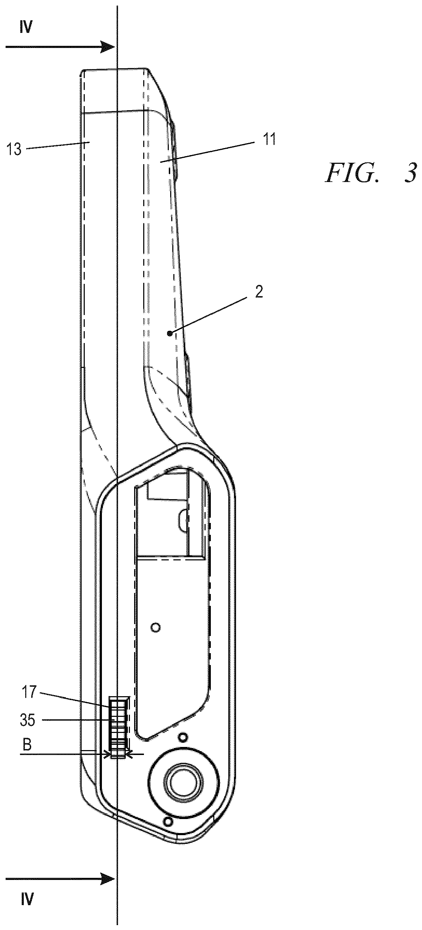

In seiner Montagestellung im ersten Gehäuseteil 11 liegt das zweite Gehäuseteil 21 vollständig innerhalb des äußeren Rahmens 3 des ersten Gehäuseteils 11. Wie die Seitenansicht in Fig. 3 zeigt, ist die Außenkontur des zusammengesetzten Gehäuses ausschließlich durch die Ränder des ersten Gehäuseteils 11 bestimmt.

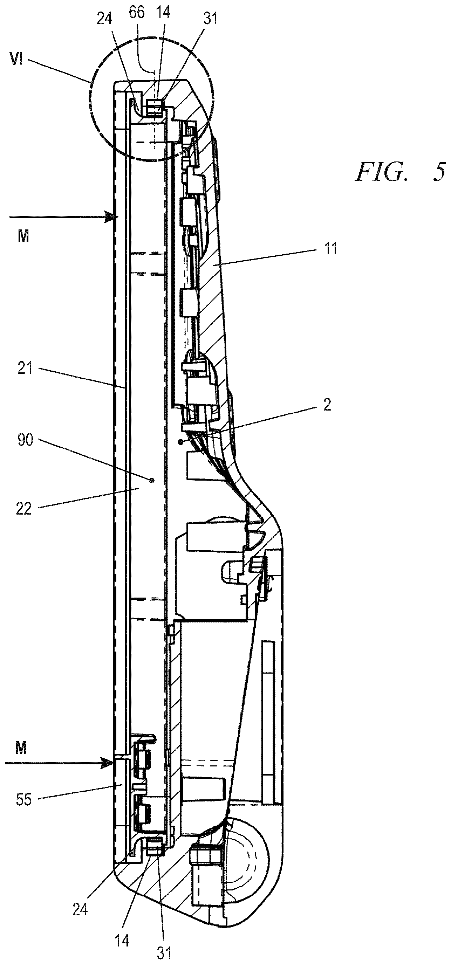

Wie aus den Darstellungen der Figuren 5 und 6 zu ersehen, liegt in der Montagestellung des zweiten Gehäuseteils 21 die Außennut 24 der Innennut 14 gegenüber. Die Nutöffnung 25 der Außennut 24 liegt der Nutöffnung 15 der Innennut 14 gegenüber. Die einander gegenüberliegenden Nuten 14, 24 begrenzen einen Riegelkanal 30, in den ein Riegelelement 31 eingeschoben ist. Wie aus der vergrößerten Darstellung in Fig. 6 ersichtlich, liegt das Riegelelement 31 mit einem ersten Teilabschnitt 32 in der Innennut 14 des ersten Gehäuseteils 11. Mit einem zweiten Teilabschnitt 33 liegt das Riegelelement 31 in der Außennut 24 des zweiten Gehäuseteils 21. Der erste Teilabschnitt 32 und der zweite Teilabschnitt 33 sind konstruktiver Teil des Riegelelementes 31, so dass über das Riegelelement 31 eine formschlüssige Verbindung zwischen dem ersten Gehäuseteil 11 und dem in seine Montageöffnung 12 eingesetzten zweiten Gehäuseteil 21 hergestellt ist.

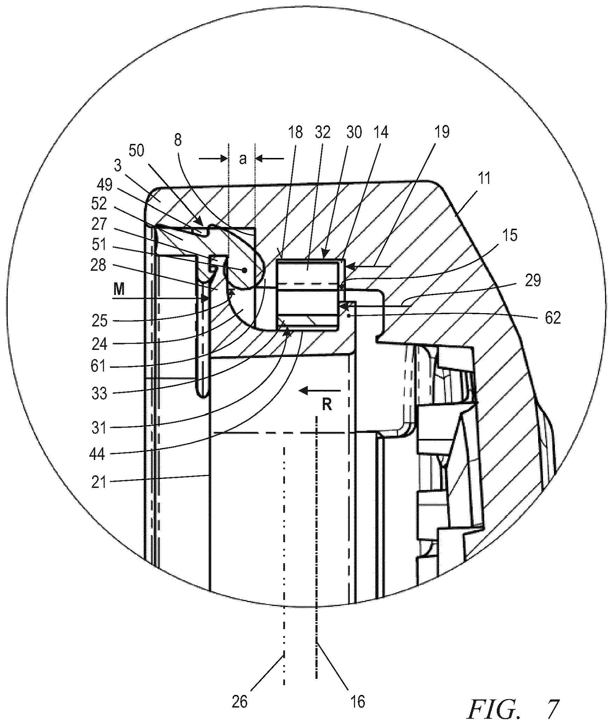

Bei einer Rückstellkraft R auf das erste Gehäuseteil 11 wirkt das erste Teilelement 32 mit dem einen Nutschenkel 61 der Innennut 14 zusammen. Das zweite Teilelement 33 wirkt mit dem Nutschenkel 62 der Außennut 24 zusammen. Die auf das erste Gehäuseteil 11 wirkende Kraft R (Fig. 7) wird über den Nutschenkel 62 der Außennut 24 auf das Riegelelement 31 übertragen und über das Riegelelement 31 auf den Nutschenkel 61 der Innennut 14 und damit am ersten Gehäuseteil 21 abgestützt.

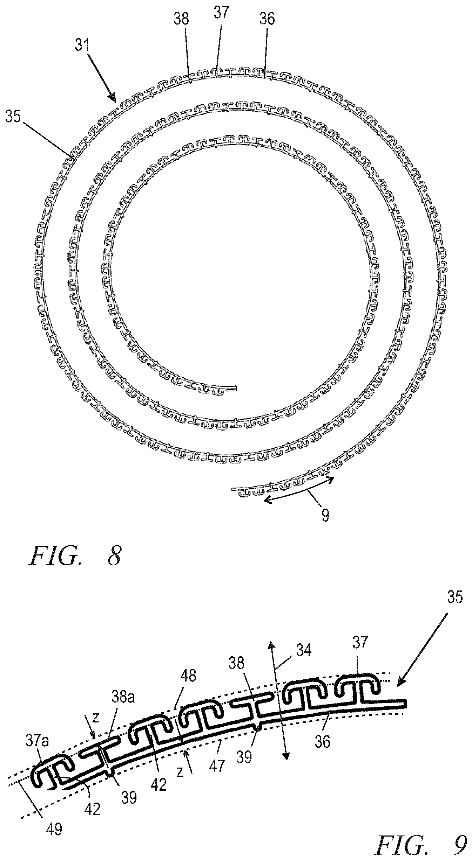

Beispiele von Riegelelementen sind in den Figuren 8 bis 11 wiedergegeben. Vorteilhaft ist das Riegelelement 31 von einem Riegelband 35 gebildet, welches einen sich in Riegellängsrichtung 9 erstreckenden bandförmigen Träger 36 aufweist, der Riegelkörper 37, 38 trägt. Das Riegelband 35 bzw. der Träger 36 hat eine Breite B, die der Breite 19 der Innennut 14 etwa entspricht. Die Breite B ist kleiner, vorzugsweise geringfügig kleiner, insbesondere etwa um 1% bis 3% kleiner als die am Nutboden 18 gemessene Breite 19 der Innennut 14.

Wie Fig. 9 zeigt, sind die Riegelkörper 37, 38 als Riegelstege 42 ausgebildet. Die Riegelkörper 37, 38 erstrecken sich über die Breite B (Fig. 1, 2) des Trägers 36. Wie Fig. 9 zeigt, sind die Riegelstege 42 des Riegelkörpers 38 in Seitenansicht T-förmig ausgebildet. Dabei ragt das Fußende 39 des Mittelsteges über die Ebene des Trägers 36 heraus.

Die Riegelstege 42 des Riegelkörpers 37 sind in Seitenansicht U-förmig ausgebildet und mit einem Mittelsteg an den Träger 36 angebunden.

Aus der vergrößerten Darstellung in Fig. 9 wird deutlich, dass alle Bodenstege 37a der Riegelkörper 37 an einer gemeinsamen Anlageebene 48 enden. Die Bodenstege 38a der Riegelkörper 38 enden an einer gemeinsamen Ebene 49, die gegenüber der Anlageebene 48 der Bodenstege 37a der Riegelkörper 37 mit einem Höhenversatz z zurückversetzt liegt.

Auf der gegenüberliegenden Seite des bandförmigen Trägers 36 bestimmen die Fußenden 39 der Mittelstege der Riegelkörper 38 eine Anlageebene 47 des Riegelbandes 35. Innerhalb des Riegelkanals 30 liegen die Fußenden 39 auf dem Nutboden 18 der Innennut 14 auf, während sich die Bodenstege 37a der Riegelkörper 37 auf dem Nutboden 44 der Außennut 24 abstützen. Die Gestaltung des Riegelbandes 35 ist derart getroffen, dass sich der Träger 36 bei Maßtoleranzen in der Höhe des Riegelkanals 30 elastisch verformen kann, so dass Maßtoleranzen ausgeglichen werden.

Das Riegelband 35 ist vorteilhaft derart gestaltet, dass sich die einer ersten Anlageebene 48 zugeordneten Riegelkörper 37 und die einer zweiten Anlageebene 47 zugeordneten Fußenden 39 der Riegelkörper 38 einander abwechseln. Im Ausführungsbeispiel nach Fig. 9 folgen auf zwei Riegelkörper 37 der ersten Anlageebene 48 jeweils ein Riegelkörper 38 mit einem Fußende 39. Andere Abfolgen der Riegelkörper 37, 38 können zweckmäßig sein.

Durch den Höhenversatz z der Anlageebenen 47 und 49 der Riegelkörper 37 und 38 sind elastische Ausgleichsbewegungen des Riegelbandes 35 senkrecht zum Riegelband 35 möglich, wie durch den Doppelpfeil 34 angedeutet ist.

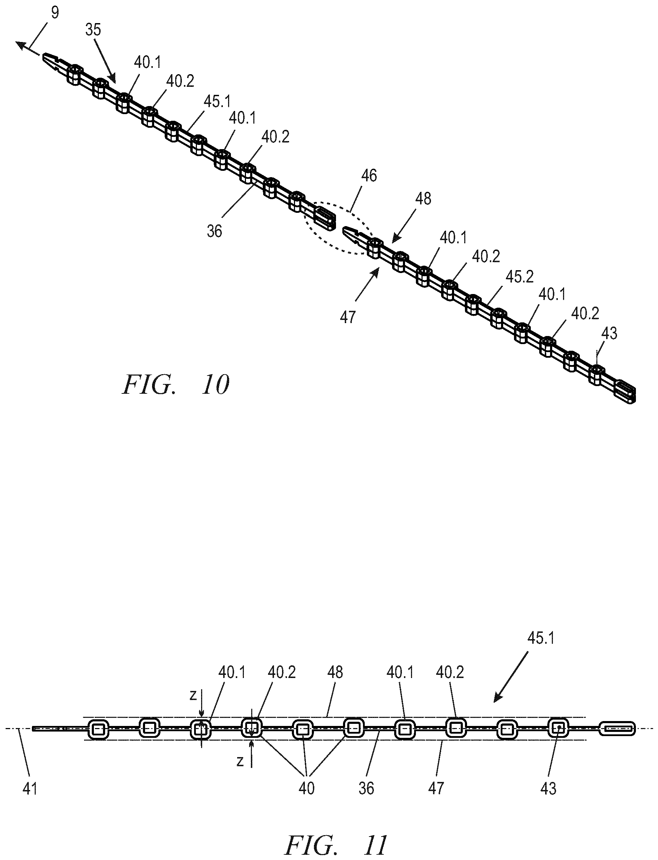

Das Riegelband 35 gemäß den Fig. 8 und 9 kann endlos gefertigt sein. In einer alternativen Ausführungsform nach den Fig. 10 und 11 kann das Riegelelement 31 aus einzelnen Riegelabschnitten 45.1, 45.2, 45.n zusammengesetzt sein. Die Riegelabschnitte 45.1, 45.2 sind über eine vorteilhaft verrastbare Kupplung 46 miteinander zu verbinden.

In Seitenansicht gemäß Fig. 11 besteht ein Riegelabschnitt, z.B. der Riegelabschnitt 45.1 aus einem mittigen Träger 36, der als Riegelkörper ausgebildete Formkörper 40 trägt. Der Riegelabschnitt 45.1 und die Formkörper 40 sind einteilig ausgebildet.

Ein Formkörper 40 kann als Zylinder, Quader oder dgl. Formkörper ausgebildet sein. Vorteilhaft ist der Formkörper 40 hohl gestaltet. Die Längsachse 43 eines Formkörpers 40 liegt insbesondere parallel zur Längsmittelebene 41 des Riegelabschnitts 45.1.

Wie die vergrößerte Darstellung in Fig. 11 zeigt, sind die Formkörper 40 aller Riegelkörper gleich ausgebildet. Alle Riegelkörper des in den Fig. 8 gezeigten Riegelbandes 35 haben gleiche Gestalt. Die in Riegellängsrichtung 9 aufeinander folgenden Formkörper 40 liegen zur Längsmittelebene 41 versetzt. Dies bedeutet, dass die Formkörper 40.1 des Riegelabschnitts 45.1 auf der einen Längsseite eine Anlageebene 48 ausbilden und die zur Längsmittelebene 41 versetzt liegenden Formkörper 40.2 des Riegelabschnitts 45.1 auf der anderen Längsseite des Riegelabschnitts 45.1 eine Anlageebene 47 vorgeben.

Ist das zweite Gehäuseteil 21, d. h. der Montagerahmen 22, in die Montageöffnung 12 des ersten Gehäuseteils 11 eingesetzt, so bilden in der Montagelage die einander gegenüberliegende Innennut 14 und die Außennut 24 den Riegelkanal 30, in den über die Zugangsöffnung 17 das Riegelelement 31 eingeschoben wird. Im gezeigten Ausführungsbeispiel nach Fig. 4 ist ein Riegelband 35 eingeschoben, welches entsprechend den Ausführungsbeispielen der Figuren 8 bis 11 ausgebildet sein kann. Über die Zugangsöffnung 17 wird das Riegelband in Einschubrichtung 5 in Riegellängsrichtung 9 eingeschoben bis das vordere eingeschobene Ende 10 des Riegelbandes 35 durch den umlaufenden Riegelkanal 30 bis zur Zugangsöffnung 17 eingeschoben ist. Ein noch aus der Zugangsöffnung 17 herausstehendes Ende des Riegelbandes wird abgeschnitten und die Zugangsöffnung 17 durch ein Verschlusselement verschlossen.

Wie Fig. 6 zeigt, liegt der Träger 36 des Riegelbandes 35 zum Nutboden 18 ausgerichtet, wobei die Riegelkörper 37, 38 bzw. die Formkörper 40 quer zum Träger in dem Riegelkanal 30 liegen. Jeder Riegelkörper 37, 38 bzw. jeder Formkörper 40 bildet somit ein einzelnes Riegelelement zum formschlüssigen Verbinden des zweiten Gehäuseteils 21 mit dem ersten Gehäuseteil 21. Diese formschlüssige Verbindung ist in einfacher Weise ohne Zerstörung dadurch lösbar, dass das Riegelband 35 nach Öffnen der Zugangsöffnung 17 wieder aus dem Riegelkanal 30 herausgezogen wird, wozu in den meisten Fällen kein Spezialwerkzeug notwendig ist.

In besonderer Ausgestaltung der Erfindung trägt ein äußerer Rand 27 des Sichtrahmens 28 ein Dichtelement 50, welches zweckmäßig als Dichtprofil ausgebildet ist. Das Dichtelement 50 weist einen Dichtabschnitt 51 auf, welcher zwischen dem Sichtrahmen 28 und der zugewandten Anschlagfläche des Anschlagrandes 8 des ersten Gehäuseteils 11 liegt. Die Anschlagfläche des Anschlagrandes bildet eine Dichtfläche für das Dichtelement 50. Ein zweiter Dichtabschnitt 52 des Dichtelementes 50 dichtet den umlaufenden Spalt 49 zwischen dem Sichtrahmen 28 und dem Rahmen 3 des ersten Gehäuseteils 11.

Der insbesondere wulstartig ausgebildete Dichtabschnitt 51 zwischen dem Sichtrahmen 28 des zweiten Gehäuseteils 21 und dem Anschlagrand 8 des ersten Gehäuseteils 11 ist dicker ausgebildet als ein maximal vorgesehener Konstruktionsabstand a (Fig. 7) zwischen dem Anschlagrand 8 und dem Sichtrahmen 28. Um die Innennut 14 mit der Außennut 24 in Deckung zu bringen, muss der Dichtabschnitt 51 durch Aufbringen einer Montagekraft M komprimiert und elastisch verformt werden. Liegen die Innennut 14 und die Außennut 24 zueinander deckungsgleich und bilden den Riegelkanal 30, kann das Riegelelement 31 in Form eines Riegelbandes 35 durch die Zugangsöffnung 17 eingeschoben werden.

Im Ausführungsbeispiel hat die Außennut 24 eine größere Nutbreite 29 als die Innennut 14. Um den Riegelkanal 30 auszubilden, ist eine maßgenaue Positionierung der Innennut 14 relativ zur Außennut 24 nicht notwendig. Zum Einschieben des Riegelelementes 31 ist es ausreichend, wenn die Innennut 14 in der Nutöffnung 25 der Außennut 24 liegt. Die aufzubringende Montagekraft M muss nur so groß sein, dass die Innennut 14 in der Nutöffnung 25 der Außennut 24 zu liegen kommt.

Wird die auf das zweite Gehäuseteil 21 wirkende Montagekraft M nach Einschieben des Riegelbandes 35 aufgehoben, verspannt die elastische Rückstellkraft R das zweite Gehäuseteil 21 über das Riegelelement 31 mit dem ersten Gehäuseteil 11. Das zweite Gehäuseteil 21 ist einerseits dicht und andererseits spielfrei im ersten Gehäuseteil 11 gehalten.

Das erste Gehäuseteil 11 umfasst neben dem Montagerahmen 22 für den Bildschirm 4 ein Bedienfeld 60, in dem Bedienelemente zur Bedienung des Tablet-PCs angeordnet sein können.

Der Montagerahmen 22 und das Bedienfeld 60 bilden zusammen das zweite Gehäuseteil 21.

## Patentansprüche

1. Gehäuse aus zumindest einem ersten Gehäuseteil (11) und zumindest einem zweiten Gehäuseteil (21), wobei das erste Gehäuseteil (11) eine Montageöffnung (12) zur Montage von elektronischen Bauteilen aufweist und das zweite Gehäuseteil (21) als Verschlusselement in der Montageöffnung (12) des ersten Gehäuseteils (11) angeordnet ist, wobei das in der Montageöffnung (12) des ersten Gehäuseteils (11) liegende zweite Gehäuseteil (21) lösbar mit dem ersten Gehäuseteil (11) verbunden ist,
**dadurch gekennzeichnet,**
**dass** in einem Innenrand (13) der Montageöffnung (12) des ersten Gehäuseteils (11) eine Innennut (14) ausgebildet ist, die sich in Längsrichtung (6) des Innenrandes (13) über zumindest einen Randabschnitt (60) erstreckt,
**dass** in einem Außenrand (23) des zweiten Gehäuseteils (21) eine Außennut (24) ausgebildet ist, die sich in Längsrichtung (7) des Außenrandes (23) über einen Randabschnitt (70) des zweiten Gehäuseteils (21) erstreckt,
**dass** in der Montagelage des zweiten Gehäuseteils (21) als Verschlusselement in der Montageöffnung (12) des ersten Gehäuseteils (11) die Außennut (24) des zweiten Gehäuseteils (21) der Innennut (14) des ersten Gehäuseteils (21) derart gegenüber liegt, dass die Innennut (14) und die Außennut (24) gemeinsam einen Riegelkanal (30) begrenzen, und zur mechanischen Verbindung des ersten Gehäuseteils (11) mit dem zweiten Gehäuseteil (21) in den Riegelkanal (30) ein Riegelelement (31) eingeschoben ist, welches mit einem ersten Teilabschnitt (32) in der Innennut (14) und mit einem zweiten Teilabschnitt (33) in der Außennut (24) liegt, wodurch eine formschlüssige Verbindung zwischen dem ersten Gehäuseteil (11) und dem zweiten Gehäuseteil (21) hergestellt ist.

2. Gehäuse nach Anspruch 1,
**dadurch gekennzeichnet, dass** das zweite Gehäuseteil (21) als Montagerahmen (22) für einen elektronischen Bildschirm (4) ausgebildet ist.

3. Gehäuse nach Anspruch 2,
**dadurch gekennzeichnet, dass** der Montagerahmen (22) einen umlaufenden Sichtrahmen (28) aufweist, und dass in der Montageöffnung (12) ein Anschlagrand (8) ausgebildet ist, und der Sichtrahmen (28) und der Anschlagrand (8) einander überlappen.

4. Gehäuse nach Anspruch 3,
**dadurch gekennzeichnet, dass** der Außenrand (24) des zweiten Gehäuseteils (21) als Träger eines elastischen Dichtelementes (50) ausgebildet ist.

5. Gehäuse nach Anspruch 4,
**dadurch gekennzeichnet, dass** das Dichtelement (50) einen Dichtabschnitt (51) aufweist, der zwischen dem Sichtrahmen (28) des zweiten Gehäuseteils (21) und dem Anschlagrand (8) des ersten Gehäuseteils (11) angeordnet ist.

6. Gehäuse nach Anspruch 5,
**dadurch gekennzeichnet, dass** das zweite Gehäuseteil (21) unter elastischer Verformung des Dichtelementes (50) in die Montageöffnung (12) des ersten Gehäuseteils (11) eingesetzt ist.

7. Gehäuse nach Anspruch 1,
**dadurch gekennzeichnet, dass** das Riegelelement (31) von einem Riegelband (35) gebildet ist, welches aus einem in eine Riegellängsrichtung (9) sich erstreckenden Träger (36) mit daran gehaltenen Riegelkörpern (37, 38) besteht.

8. Gehäuse nach Anspruch 7,
**dadurch gekennzeichnet, dass** der Träger (36) eine Breite (B) aufweist, die kleiner oder gleich der Breite (19) der Innennut (14) ist.

9. Gehäuse nach Anspruch 7,
**dadurch gekennzeichnet, dass** ein Riegelkörper (37, 38) als Riegelsteg (42) ausgebildet ist, und sich der Riegelsteg (42) quer zur Riegellängsrichtung (9) erstreckt.

10. Gehäuse nach Anspruch 9,
**dadurch gekennzeichnet, dass** sich der Riegelsteg (42) über insbesondere die gesamte Breite (B) des Trägers (36) erstreckt.

11. Gehäuse nach Anspruch 1,
**dadurch gekennzeichnet, dass** das Riegelelement (31) über eine Zugangsöffnung (17) in Riegellängsrichtung (9) in den Riegelkanal (30) eingeschoben ist.

12. Gehäuse nach Anspruch 1,
**dadurch gekennzeichnet, dass** die Innennut (14) und/oder die Außennut (24) als endlose, umlaufende Nut ausgebildet ist.

13. Gehäuse nach Anspruch 1,
**dadurch gekennzeichnet, dass** der Riegelkanal (30) ein umlaufender Ringkanal ist und mit zumindest einer Zugangsöffnung (17) ausgebildet ist.

14. Gehäuse nach Anspruch 11,
**dadurch gekennzeichnet, dass** die Zugangsöffnung (17) im Nutboden (18) der Innennut (14) ausgebildet ist.

## Claims

1. Housing made of at least one first housing part (11) and at least one second housing part (21),
wherein the first housing part (11) has an installation opening (12) for the installation of electronic components and the second housing part (21) is located at a closure element in the installation opening (12) of the first housing part (11),
wherein the second housing part (21) lying in the installation opening (12) of the first housing part (11) is releasably connected to the first housing part (11),
**characterised in that** an internal groove (14) extending in the longitudinal direction (6) of the inner edge (13) along at least one edge section (60) is formed in an inner edge (13) of the first housing part (11),
**in that** an external groove (23) extending in the longitudinal direction (7) of the outer edge (23) along an edge section (70) of the second housing part (21) is formed in an outer edge (23) of the second housing part (21),
**in that** in the installed position of the second housing part (21), the external groove (23) of the second housing part (21) is located opposite the internal groove (14) of the first housing part (11) in such a way as a closure element in the installation opening (12) of the first housing part (11) that the internal groove (14) and the external groove (23) jointly bound a lock channel (30) and a lock element (31) is inserted into the lock channel (30) for mechanically joining the first housing part (11) to the second housing part (21), which lock element (31) lies in the internal groove (14) with a first subsection (32) and in the external groove (23) with a second subsection (33), whereby a positive connection is established between the first housing part (11) and the second housing part (21).

2. Housing according to claim 1,
**characterised in that** the second housing part (21) is designed as a mounting frame (22) for an electronic screen (4).

3. Housing according to claim 2,
**characterised in that** the mounting frame (22) has a continuous viewing frame (28), and **in that** a stop edge (8) is formed in the installation opening (12) and the viewing frame (28) and the stop edge (8) overlap each other.

4. Housing according to claim 3,
**characterised in that** the outer edge (24) of the second housing part (21) is designed as a support of an elastic sealing element (50).

5. Housing according to claim 4,
**characterised in that** the sealing element (50) has a sealing section (51), which is located between the viewing frame (28) of the second housing part (21) and the stop edge (8) of the first housing part (11).

6. Housing according to claim 5,
**characterised in that** the second housing part (21) is installed into the installation opening (12) of the first housing part (11) while the sealing element (50) is deformed elastically.

7. Housing according to claim 1,
**characterised in that** the lock element (31) is represented by a lock tape (35) consisting of a support (36) extending in the lock longitudinal direction (9) and lock bodies (37, 38) held thereon.

8. Housing according to claim 7,
**characterised in that** the support (36) has a width (B) which is less than or equal to the width (19) of the internal groove (14).

9. Housing according to claim 7,
**characterised in that** a lock body (37, 38) is designed as a lock web (42), and **in that** the lock web (42) extends transversely to the lock longitudinal direction (9).

10. Housing according to claim 9,
**characterised in that** the lock web (42) in particular extends across the entire width (B) of the support (36).

11. Housing according to claim 1,
**characterised in that** the lock element (31) is inserted into the lock channel (30) via an access opening (17) in the lock longitudinal direction (9).

12. Housing according to claim 1,
**characterised in that** the internal groove (14) and the external groove (24) is/are designed as a continuous groove/continuous grooves.

13. Housing according to claim 1,
**characterised in that** the lock channel (30) is a continuous annular channel and designed with at least one access opening (17).

14. Housing according to claim 11,
**characterised in that** the access opening (17) is formed in the groove base (18) of the internal groove (14).

## Revendications

1. Boîtier composé d'au moins un premier élément de boîtier (11) et d'au moins un deuxième élément de boîtier (21), dans lequel le premier élément de boîtier (11) présente une ouverture de montage (12) pour le montage de composants électroniques et le deuxième élément de boîtier (21) est disposé comme élément de fermeture dans l'ouverture de montage (12) du premier élément de boîtier (11), dans lequel le deuxième élément de boîtier (21) situé dans l'ouverture de montage (12) du premier élément de boîtier (11) est relié de manière amovible au premier élément de boîtier (11),
**caractérisé en ce que** dans un bord intérieur (13) de l'ouverture de montage (12) du premier élément de boîtier (11) est formée une rainure intérieure (14) qui s'étend dans la direction longitudinale (6) du bord intérieur (13) sur au moins une section de bord (60), **en ce que** dans un bord extérieur (23) du deuxième élément de boîtier (21) est formée une rainure extérieure (24) qui s'étend dans la direction longitudinale (7) du bord extérieur (23) sur une section de bord (70) du deuxième élément de boîtier (21),
**en ce que** dans la position de montage du deuxième élément de boîtier (21) comme élément de fermeture dans l'ouverture de montage (12) du premier élément de boîtier (11), la rainure extérieure (24) du deuxième élément de boîtier (21) se trouve en face de la rainure intérieure (14) du premier élément de boîtier (11) de telle sorte que la rainure intérieure (14) et la rainure extérieure (24) délimitent conjointement un canal de verrou (30), et pour la liaison mécanique du premier élément de boîtier (11) avec le deuxième élément de boîtier (21) est glissé dans le canal de verrou (30) un élément de verrou (31) qui est situé avec une première section partielle (32) dans la rainure intérieure (14) et avec une deuxième section partielle (33) dans la rainure extérieure (24), moyennant quoi une liaison par complémentarité de forme est réalisée entre le premier élément de boîtier (11) et le deuxième élément de boîtier (21).

2. Boîtier selon la revendication 1,
**caractérisé en ce que** le deuxième élément de boîtier (21) est formé comme cadre de montage (22) pour un écran électronique (4).

3. Boîtier selon la revendication 2,
**caractérisé en ce que** le cadre de montage (22) présente un cadre apparent périphérique (28), et **en ce que** dans l'ouverture de montage (12) est formé un bord de butée (8), et le cadre apparent (28) et le bord de butée (8) se recouvrent.

4. Boîtier selon la revendication 3,
**caractérisé en ce que** le bord extérieur (24) du deuxième élément de boîtier (21) est formé comme support d'un élément d'étanchéité élastique (50).

5. Boîtier selon la revendication 4,
**caractérisé en ce que** l'élément d'étanchéité (50) présente une section d'étanchéité (51) qui est disposée entre le cadre apparent (28) du deuxième élément de boîtier (21) et le bord de butée (8) du premier élément de boîtier (11).

6. Boîtier selon la revendication 5,
**caractérisé en ce que** le deuxième élément de boîtier (21) est inséré avec une déformation élastique de l'élément d'étanchéité (50) dans l'ouverture de montage (12) du premier élément de boîtier (11).

7. Boîtier selon la revendication 1,
**caractérisé en ce que** l'élément de verrou (31) est formé par une bande de verrou (35) qui se compose d'un support (36) s'étendant dans une direction longitudinale de verrou (9), avec des corps de verrou (37, 38) retenus sur ledit support (36).

8. Boîtier selon la revendication 7,
**caractérisé en ce que** le support (36) présente une largeur (B) qui est inférieure ou égale à la largeur (19) de la rainure intérieure (14).

9. Boîtier selon la revendication 7,
**caractérisé en ce qu'**un corps de verrou (37, 38) est formé comme une branche de verrou (42), et la branche de verrou (42) s'étend transversalement par rapport à la direction longitudinale de verrou (9).

10. Boîtier selon la revendication 9,
**caractérisé en ce que** la branche de verrou (42) s'étend en particulier sur toute la largeur (B) du support (36).

11. Boîtier selon la revendication 1,
**caractérisé en ce que** l'élément de verrou (31) est glissé dans le canal de verrou (30) dans la direction longitudinale de verrou (9) par une ouverture d'accès (17).

12. Boîtier selon la revendication 1,
**caractérisé en ce que** la rainure intérieure (14) et/ou la rainure extérieure (24) sont formées comme des rainures périphériques continues.

13. Boîtier selon la revendication 1,
**caractérisé en ce que** le canal de verrou (30) est un canal annulaire périphérique et est formé avec au moins une ouverture d'accès (17).

14. Boîtier selon la revendication 11,
**caractérisé en ce que** l'ouverture d'accès (17) est formée dans le fond de rainure (18) de la rainure intérieure (14).
